# EUROPEAN PATENT APPLICATION

(11) **EP 2 100 776 A1**
(43) Date of publication of application: **16.09.2009**
(21) Application number: 09380053.0
(22) Date of filing: 13.03.2009
(51) Int. Cl.: B60R 5/04

(54) **Rear parcel shelf for automobiles**

(30) Priority: 14.03.2008 ES 200800539 U
(71) Applicant: Seat, S.A., 08760 Martorell (ES)
(72) Inventor: Romero Pérez, Arturo, 08760 Martorell - Barcelona (ES); Colet Gali, Joan, 08760 Martorell - Barcelona (ES); Romeo Alcocer, Alberto, 08760 Martorell - Barcelona (ES)
(74) Representative: Carvajal y Urquijo, Isabel

(57) **Abstract**

Rear parcel shelf for automobiles comprising a panel (6) behind the rear seats, mounted on two lateral supports (16) integral to the chassis of the automobile, with which it is linked in a removable way by means of two axes of rotation (1,2), a front one (1) coinciding with the front edge (3) of the panel and a back one (2), close to the back edge of said panel. The panel has a first and second intermediate folding lines (6,7) parallel to the axes of rotation (1,2), which define three sections, a front section (8), a central section (9) and a back section (10); whose first folding line (6) is located between the two axes of rotation and enables to fold the panel (6), between the front section (8) and the intermediate section (9), but not in the opposite direction; and a second folding line (7) coinciding with the back axis which enables to fold the panel (6), between the central section (9) and the back section (10), but not in the opposite direction.

## Description

### FIELD OF THE INVENTION

The present invention refers to a rear parcel shelf for automobiles, intended for closing the upper part of the hole behind the rear seat of the automobile and serving as a surface for placing certain objects or garments.

The shelf of the invention comprises a panel having an edge which approximately coincides with that of the hole behind the rear seats, for closing said hole, being the panel mounted on the sides of the chassis.

### BACKGROUND OF THE INVENTION

There are already known shelves to the aforementioned end, normally comprising a rigid panel which rests on lateral supports, closing the hole formed behind the rear seats.

In a known type of shelves, the panel rests frontally on the lateral supports through pivots or sheaves defining a joint axis of rotation, around which the panel can tilt, for its later elevation. To that end, the panel is linked to the back door through chains or suspension ropes, so that when this back door is lifted, the panel is tilted and rises. The panel can also be removed. With this setup, to have access to the objects located in the trunk, whether they are tools or any other kind of objects, it is always necessary to stop the vehicle and open the trunk. In long trips or when it is raining, this is an inconvenience, since it is not possible to have access to the trunk from the inside of the vehicle.

In the utility model 200702620 of the same applicant there is described a rear parcel shelf for automobiles, comprising a rigid panel mounted on the lateral supports through two axes of rotation, both perpendicular to the longitudinal axis of the automobile and approximately coinciding with or close to the front and back edges of the panel, being it possible for one of the two axes to work as a tilting axis for the panel, to lift it from the opposite edge. This arrangement enables not only to lift the panel in the traditional way when the back door is opened, but also to lift the shelf from its front edge, the back axis acting as a tilting axis to enable to access the trunk from the inside of the vehicle, without needing to open the back door. However, being the shelf comprised of a rigid panel, it does not allow to open the trunk completely and it is also necessary to hold the panel in the upper position, when this elevation is performed from the front edge of the shelf so as to access the inside of the trunk from inside of the vehicle.

### DESCRIPTION OF THE INVENTION

The object of the present invention is to solve the problems posed by traditional shelves, using an arrangement which enables to have access to the trunk from inside the vehicle, locating the shelf in a stable position, which does not need to be held, and also offering wide access to the trunk.

The shelf of the invention also has an advantage, with respect to the traditional shelves, namely that it enables to carry objects in the trunk which are taller than said trunk, without needing to dismantle said shelf or having to open it completely.

Another advantage of the shelf of the invention is that, once dismantled, it can be folded so as to occupy a reduced volume, thus facilitating its storage in the trunk, when necessary.

The shelf of the invention refers to the type of shelves explained, containing a panel which rests behind the rear seats, mounted on two integral lateral supports to the chassis of the automobile, being said shelf linked to supports through axes of rotation, a front one coinciding with the front edge of the panel and a back one close to the back edge of the panel.

With this arrangement, the shelf of the invention is **characterized in that** the panel has two folding lines parallel to the axes of rotation, a first folding line located between the two axes of rotation and a second folding line coinciding with the back axis of rotation. The two aforementioned folding lines define three sections, a front section, a central section and a back section.

The first folding line enables to fold the panel, between the front section and the intermediate section, with the concavity of the folding pointing downwards, but not in the opposite direction.

As for the second folding line, it enables to fold the panel, between the central section and the back section, with the concavity of the folding pointing upwards, but not in the opposite direction.

For the folding lines to enable the folding only in the direction indicated, said folding lines are defined by reducing the thickness of the panel, from the upper surface in the first folding line and from the lower surface in the second folding line, determining in both cases a groove whose bottom defines a hinge or joint which enables the folding of the panel 180° in a different direction in both grooves. Besides, one of the walls limiting the aforementioned grooves has, in a position adjacent to its free longitudinal edge, an overthickness which practically closes the groove and rests on the opposite wall to act as a stop preventing the folding of the panel in the opposite direction to the one permitted by the folding line, defined by the bottom of the channel.

The joint axes of the shelf can be defined by pivots or sheaves which protrude from the edges of the panel parallel to the longitudinal axis of the vehicle and which rest on u-shaped notches facing each other which have at the top two lateral supports on which the panel rests.

The front section of the panel has a central upper hollow to act as a grip through which, pushing the shelf backwards from the rear seat, it is possible to fold it on its first-folding line, producing a hole from the rear seat which enables to access the inside of the trunk. The folding in the opposite direction, through the same folding line, is secured by constituting the folding line through the previously mentioned groove, with the longitudinal upper stop.

In order to attain the folding described without shifting the shelf, it is necessary to add a reaction on the back part thereof. This is achieved with the back axis, on which the central section of the panel will pivot, thus enabling the folding between the front section and the central section thereof.

The folding position described is stable, in the completely open position, thanks to grooves or angled marks, facing each other in both supports, on which the free edge of the front section of the panel is fixed, when it is folding at the front folding line. In order to close the shelf again it is only necessary to pull from the grip to the front section, until the edge of the shelf comes out from the V-shaped grooves. From that moment on the shelf will fall of its own weight until it reaches a horizontal position on the lateral supports.

Form the second folding line, the shelf can be folded, between the central and back sections, with the concavity pointing downwards, causing the back section to tilt on the back folding line, until it can rest on the central section of the panel, thus obtaining a rear hole which will enable to transport objects which are taller than the trunk. In this case, in order to avoid the folding in the opposite -undesired- direction, when the shelf is lifted normally when the door is opened, it will only be necessary to place the anchorage points of the ropes holding the shelf hanging from the door, in front of this second folding line.

In addition, in order to attain the desired effects the u-shaped notches on which the pivots or sheaves rest, which define the joint axes of the shelf, feature a special configuration so that the front neck prevents the front axis from moving backwards when the shelf is pushed from the grip for the folding at the first folding line, while the u-shaped notch of the back axis will have to hold the back axis to produce the reaction on itself, which is necessary for the folding and it will only let it free the moment the door is to be lifted.

To that end, the u-shaped notches on which the pivots or sheaves rest, which define the front joint axis are limited by a curved front edge, surrounding the axis in approximately 180°, preventing its forward movement, while they are open at the back according to a first section which is approximately horizontal, tangent to the bottom of the u-shaped notch and separated from said bottom by a slight elevation, followed by a second upward section which reaches the upper edge of the support. This profile of the u-shaped notches will enable the back axis to move without difficulties when pushed backwards.

As for the u-shaped notches on which the pivots or sheaves rest, and which define the back joint axis, they will have a circular design and run upwards through a slight narrowing, through which the accidental falling off of said axis is avoided, but allowed when being pulled when the door is opened.

### BRIEF DESCRIPTION OF THE DRAWINGS

The attached drawings show a non-limiting example of an embodiment, which will help understand better the constitution, characteristics and advantages of the shelf of the invention.

In the drawings:
Figure 1 shows a plant view of a shelf constituted according to the invention.
Figure 2 shows a lateral view of the shelf installed in a vehicle, in the A direction of figure 1.
Figure 3 shows detail B of figure 2, at a larger scale.
Figure 4 shows detail C of figure 2, at a larger scale.
Figure 5 shows a section of the shelf, in the longitudinal direction of the vehicle, according to the cutting line V-V of figure 1.
Figure 6 shows detail D of figure 5, at a larger scale.
Figure 7 shows detail E of figure 5, at a larger scale.

### DETAILED DESCRIPTION OF AN EMBODIMENT

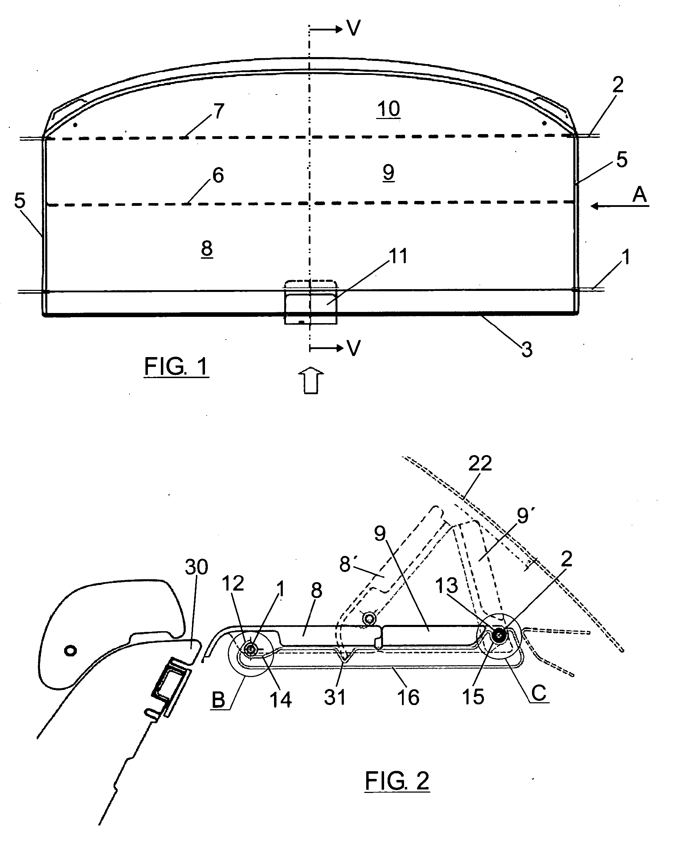

The shelf of the invention, according to the embodiment shown in the drawings, comprises a panel which, as shown in figure 1, has two joint axes, which are indicated by the reference numbers 1 and 2, the joint axis 1 coinciding with or being close to the front edge 3 of the shelf, while the axis 2 is found at a distance from the back axis 4, coinciding with the back of the straight section of the lateral edges 5 of the panel.

The panel forming the shelf also has a first folding line which is indicated by the reference number 6, and a second folding line indicated by the reference number 7, being the first folding line 6 located between the front joint axes 1 and the back joint axis 2, while the second folding line is located in a position coinciding with the back axis 2.

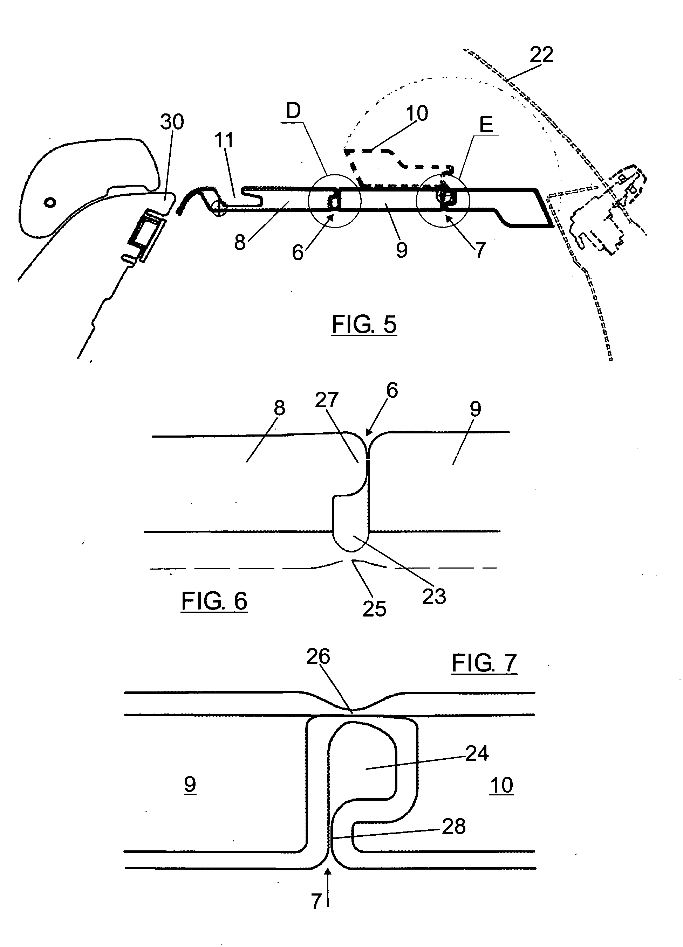

Both folding lines mentioned divide the panel in three sections, a front section, indicated by the reference number 8, an intermediate section, indicated by the reference number 9 and a back section, indicated by the reference number 10. The front section 8 has a hollow 11 to act as a grip, as it can be better observed in figure 5.

The front joint axis 1 and the back joint axis 2 can be defined by pivots or sheaves 12 and 13, figures 2 to 4, which protrude from the lateral edges 5 of the panel and rest on u-shaped notches 14 and 15 which feature lateral supports 16 at the top, which are integral to the automobile chassis and on which the shelf rests.

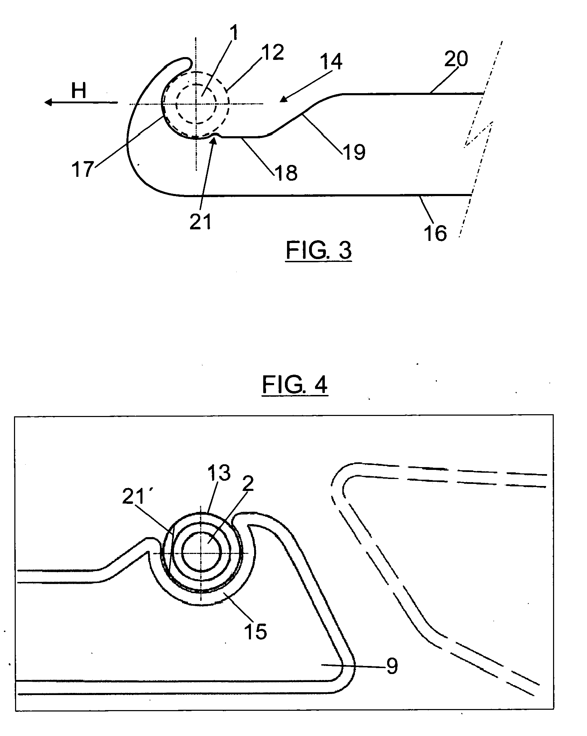

As it can be seen better in figure 3, the notch 14, on which the sheaves 12 forming the front axis are mounted, is limited by a curved front edge 17, approximately semicircular, so as to surround the pivot or sheave 12 in approximately 180° and prevent it from moving forward, in the direction of arrow H of figure 3, whose edge extends in an approximately horizontal lower section 18, which is tangent to the curve edge 17, to finally end in an upward second section 19, which reaches the top edge 20 of the lateral supports 16.

With this arrangement, the sheave 12 cannot move forward, in the direction of arrow H of figure 3, while it can move backwards, in, the direction of arrow J.

To ensure the coupled position of the pivot or sheave 12 against the front edge 17, the lower section 18 has a slight elevation 21 which can be easily freed, in case the sheave 12 is pushed backwards.

As regards the notch 15, which houses the sheaves 13 which define the back axis 2, as it can be seen better in figure 4, it has a circular outline, with a width slightly bigger than 180°, so that they have a slight widening in its mouth which prevents the accidental exit of the sheave 13, sheave which can have a lateral chamfer 21', located in such a way that it facilitates the extraction of said sheave from the housing 15 when the back door is lifted, when fixing the anchorage points in the rope holding the shelf hanging from the door 22 in front of the second folding line 7.

As regards the first and second folding lines 6 and 7, they are formed in such a way that the folding of the shelf is made on them in the opposite direction.

To that end, as it can be seen in figures 5 to 7, the folding lines are obtained through the reduction of the width of the panel forming the shelf, from the upper surface of the first folding line 6 and from the lower surface of the second folding line 7, as it can be seen better in figures 6 and 7. These width reductions determine in each case a channel 23 and 24, whose bottom 25 and 26 determines the joint line or hinge defining the corresponding folding line.

Moreover, as it can be observed better in figures 6 and 7, one of the walls limiting the channels 23 and 24 has, in a position adjacent to its longitudinal edge, an overthickness 27-28 closing the mouth of the corresponding channel 23-24 and acting as a stop to prevent the folding in the opposite direction to the one permitted by the folding line defined by the bottom 25-26 of the channels.

With the arrangement described, the first folding line 6 enables to fold the shelf, between sections 8 and 9, with the concavity pointing downwards, as shown in figure 2, being said sections in the positions indicated by numbers 8' and 9', in which they determine, behind the rear seats 30 of the automobile, an opening which is wide enough to enable to access the trunk, without having to get out of the vehicle.

To secure this opening, the lateral supports 16 have at the top aligned grooves or v-shaped notches 31, figure 2, in which the front edge of section 8' penetrates and rests, being fixed in said section. In order to extend the shelf again it will only be necessary to slightly lift the section 8' by operating the grip 11 of said section.

Through the second folding line 7 it is possible to fold the shelf in the opposite direction to the previously described one. This folding line enables to fold up the back section 10 on the upper surface of the intermediate section 9, as it can be seen in figure 5, so that it is produced a rear opening of the shelf enabling to carry taller items in the trunk, such as plants whose upper part will project through the hole defined between the central section 9 of the panel and the back door 22 of the vehicle.

With the arrangement described, pushing backwards on the grip 11, and thanks to the anchorage which defines the back pivots or sheaves 13 in their corresponding housing, it is correspondingly possible to fold sections 8 and 9 of the shelf, as shown in figure 2.

The second folding line 7 prevents, on the one hand, the back section 10 of the panel from invading the volume of the trunk when the shelf is folded as shown in figure 2, since the final third of the panel is left motionless, and on the other hand, it adds the possibility of enabling to fold this last third at will as shown in figure 5.

With the arrangement of the folding lines in the way described, the distribution of the hinge and stop functions is reverse in both folding lines: in the folding line 6 the hinge function is located in the lower part and the stop function in the upper part, while in the second folding line 7 the hinge function is located in the upper part and the stop function in the lower part.

The existence of both folding lines also enables to fold the shelf in three sections, like an accordion, reducing its volume for its storage and transportation.

## Claims

1. Rear parcel shelf for automobiles comprising a panel behind the rear seats, mounted on two lateral supports integral to the chassis of the automobile, with which it is linked, the panel being movable relating to the supports by means of two axes of rotation, a front axis coinciding with the front edge of the panel, and a back axis which is close to the back edge of said panel, **characterized in that** the panel also comprises a first and second intermediate folding lines parallel to the axes of rotation, which define three sections, a front section, a central section and a back section; whose first folding line is located between the two axes of rotation and enables to fold the panel, between the front section and the intermediate section, with the concavity of the folding pointing downwards, but not in the opposite direction; and whose second folding line coincides with the back axis of rotation and which enables to fold the panel, between the central section and the back section, with the concavity of the folding pointing upwards, but not in the opposite direction.

2. Shelf according to claim 1, **characterized in that** the lateral supports have at the top aligned angular grooves or v-shaped notches, in which the front edge of the panel is fitted, when said panel is folded at the front folding line.

3. Shelf according to claim 1, **characterized in that** the two folding lines are defined by the width reduction of the panel, from the lower surface of the first folding line and from the lower surface of the second folding line, determining in both cases a groove, at the bottom of which, acting this bottom as joint or hinge, the panel can be folded 180° in a different direction.

4. Shelf according to claim 3, **characterized in that** one of the walls which limit the grooves defined by the width reduction of the panel has, in a position adjacent to its free longitudinal edge, an overthickness which closes the groove and rests on the opposite wall and acts as a stop preventing the folding of the panel in the opposite direction to the one permitted by each folding line.

5. Shelf according to claim 1, **characterized in that** the joint axes are defined by pivots or sheaves which protrude from the edges of the panel parallel to the longitudinal axis of the vehicle and which rest on u-shaped notches facing each other, which have two lateral supports of the panel at the top.

6. Shelf according to claim 5, **characterized in that** the u-shaped notches on which the pivots or sheaves rest, which define the front joint axis, are limited by a curved front edge, surrounding the axis in approximately 180°, preventing the panel from moving forward, while they are open at the back according to a first section which is approximately horizontal, tangent to the bottom of the u-shaped notch and separated from said bottom by a slight elevation, followed by a second upward-section which reaches the upper edge of the support.

7. Shelf according to claim 5, **characterized in that** the u-shaped notches on which the pivots or sheaves rest, which define the back joint axis, have a circular design and run upwards through a slight narrowing.

8. Shelf according to claim 1, **characterized in that** the front section of the panel has an upper central hollow, which constitutes a grip.
